# EUROPEAN PATENT SPECIFICATION

(11) **EP 4 674 106 B1**
(45) Date of publication and mention of the grant of the patent: **22.07.2026**
(21) Application number: 23723624.5
(22) Date of filing: 13.04.2023
(51) Int. Cl.: H04L 65/1094, H04L 65/61

(54) **SYSTEMS AND METHODS FOR STREAMING CONTENT**
SYSTEME UND VERFAHREN ZUM STREAMING VON INHALT
SYSTÈMES ET PROCÉDÉS DE DIFFUSION EN CONTINU DE CONTENU

(43) Date of publication of application: 07.01.2026
(73) Proprietor: NEVAYA LIMITED, Blunsdon Swindon SN26 7AD (GB)
(72) Inventor: CLIFFORD, Ben, Swindon, SN26 7AD (GB)
(74) Representative: Noble, Frederick
(86) International application number: PCT/GB2023/050992
(87) International publication number: WO 2024/213862

(56) References cited:
- US-A1- 2017 124 297
- US-A1- 2017 195 695
- US-A1- 2018 160 455
- US-B1- 10 686 856

## Description

The present invention relates to a system for streaming audio and video content to an in-room television or in-room display within a multi-room accommodation and particularly but not exclusively to a system for streaming audio and video data to an in-room television or in-room display within a multi-room accommodation by pairing a guest device connected to an accommodation subnetwork with a remote media streaming device on a separate subnet.

### BACKGROUND TO THE INVENTION

Multi-room accommodations, especially hotels, are known to provide In-Room-Entertainment services on a television or other display capable of displaying video content inside each room for their guests, tenants or residents. For example, the In-Room-Entertainment may provide entertainment content, such as movies or TV shows, or local information.

Traditionally the televisions are connected to an accommodation wide audio-visual system which typically comprises a central stack or server within the multi-rom accommodation. The central stack or server is used so that each room and television does not require its own set top box with an audio-visual signal decoder to allow viewing of content. The central stack or server provides a way to control, organise and distribute content to each television at the request of the guest, resident or tenant. Typically, the guest, tenant or resident would have access to various channels with set content schedules and pay-per-view movie channels through the accommodation wide audio-visual system.

With the advent of high-speed internet and streaming services, users have become accustomed to easy and convenient access to large volumes of media content through the service provided by the streaming service providers. Typically, the streaming service will make suggestions as to what they believe the user of the profile will like based on the usage record and provide a convenient solution to pick up where the user left off. This individualised service has resulted in hotel guests wanting to watch the content available through their accounts on the streaming services.

Guests, tenants or residents will typically connect to the accommodation's wireless network to access their streaming service account through the internet to avoid using mobile data. In such cases the viewing experience is substandard as the wireless network can be lossy and slow resulting in low quality video which may need to be buffered. Additionally, the user will likely access their accounts through personal devices such as smart phones, tablet computers, laptops or similar, to maintain account security, however, this results in a reduced viewing experience since the content is displayed on a small screen. Some users have security concern about using networks with multiple devices of unknown users.

To address this issue multi-room accommodations have started to include streaming devices connected to, or incorporated in, the TV within the room to allow the guest, tenant or resident to mirror their device display onto the TV or stream content through controlling applications running on their device which is paired to the streaming device. Example of a streaming device typically connected to the TV is a Chromecast (RTM).

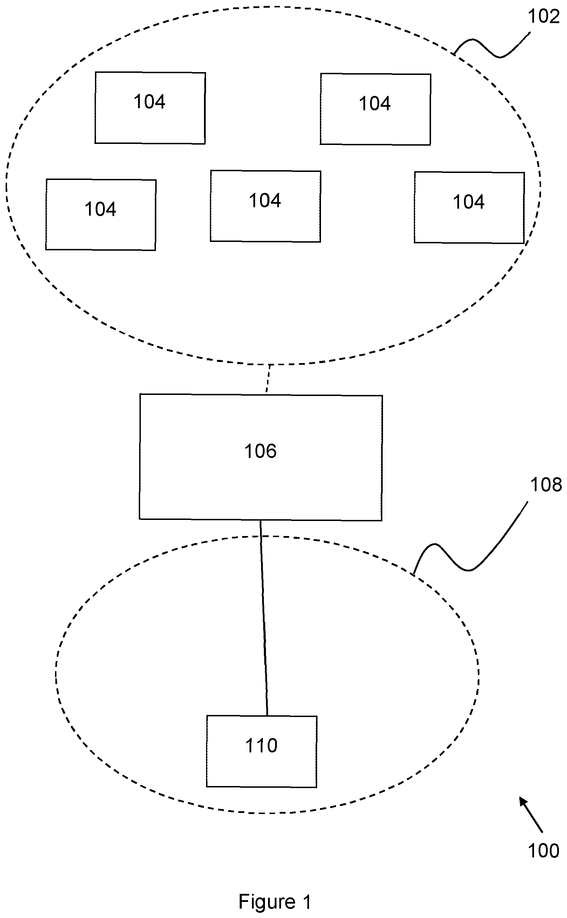

Figure 1 shows a typical version of an existing system 100 using streaming and/or casting devices within a hotel.

The guest will connect to the device over the hotel's wireless network 102, preferably a dedicated streaming wireless local area network (WLAN) for in-room entertainment services. A plurality of streaming devices 104, such as Chromecasts, are connected to the wireless network 102. The network 104 being connected to an on-site proxy server 106, i.e. a server provided within the hotel's premises. The proxy server 106 being connected to a High Speed Internet Access Local Area Network (HSIA LAN) 108 with a gateway 110 to the internet.

The implementation shown in Figure 1 allows the hotels to provide an additional layer of security as well as centralised control, including the ability to provide additional services and promotions, but it can be expensive to implement and requires high levels of maintenance, is inefficient and is difficult to maintain. For example, each TV requires a dedicated casting device, either as an additional dongle or integrated component, which increases costs, and must maintain a connection to the wireless local area network connected to the proxy server so requires suitable wireless signal strength.

Additionally, there is a significant power consumption on-site from these types of implementations given the number of devices. This consumption is exacerbated when there are multiple hotels, for example, a chain of hotels using the same system implementation. Similar problems are present in other types of multi-room accommodations, such as student accommodations, serviced apartments, senior living multi-room accommodation etc.

US10686856 B1 discloses a hotel multicast services manager system for initiating a media streaming device. This system comprises a proxy server which transmits communications between a mobile device and the media streaming device on a hotel guest network, the media streaming unit allowing streaming of media content over a cloud server. The system monitors mDNS requests from the mobile device to the media streaming device, communicates that the media streaming device is connected to the hotel guest network, connects the mobile device to the media streaming device, and, on receipt of a command from the mobile device, streams media content to the media streaming device, which is then displayed on a display device such as a television.

US2017/124297 A1 relates to pairing devices to prevent digital content misuse. A computing device is paired to an identified viewing device so that that computing device can cause content received from a remote server to be displayed on the paired viewing device. A QR code may be provided on the viewing device, with the computing device pairing to the viewing device by scanning the QR code.

US2018/160455 A1 is a system and method for controlling media content in a multi-room environment using a wireless communication device. A media streaming device is coupled to an access point in the multi-room environment. A client computing platform obtains authentication to the wireless communication network via the access point, allowing a user to access media content between their client computing platform and the media streaming device. The power usage of the media streaming device may also be monitored.

US2017/195695 A1 discloses a system and method for authenticating and providing application access via a hotel management system. A cloud management system establishes a connection between the hotel management system and a set top box which comprises applications accessible to a user. The set top box transmits a access request to the cloud management system when a user wishes to access the applications. This is granted on receipt of payment by the user.

It is an object of the present invention to reduce or substantially obviate the aforementioned problems.

### STATEMENT OF INVENTION

The present invention is defined by the subject-matter of the independent claims. Further details are defined in the dependent claims.

According to the present invention there is provided a content streaming system for streaming audio and video data to a television within a multi-room accommodation, the system comprising: a multi-room accommodation router being operably configured to connect to an on-site local area network at a multi-room accommodation site, the multi-room accommodation router being configured to monitor, interact with and forward data packets on the local area network of said multi-room accommodation; a media streaming unit disposed off-site with respect to the multi-room accommodation, the media streaming unit including a plurality of media streaming devices, each media streaming device being operable to encode and transmit audio and video data to the television within the multi-room accommodation; and a cloud server disposed off-site with respect to the multi-room accommodation, the cloud server comprising a virtual multi-room accommodation site container communicatively connected to the multi-room accommodation router and to the media streaming unit; wherein the system is configured to: monitor data packets from the on-site local area network of said multi-room accommodation for media streaming device connection requests from a guest device connected to the on-site local area network of said multi-room accommodation; communicate, in response to media streaming device connection request, a notification packet for the or each media streaming device from the cloud server to the guest device connected to the on-site local area network through the multi-room accommodation router, wherein the notification packet comprises at least some authentic device description details and at least some modified data configured to show that the or each media streaming device is part of the on-site local area network at the multi-room accommodation; establish connection between the guest device on the on-site local area network and one of the media streaming devices in the off-site media streaming unit through the cloud server; receive instructions for the media streaming device from the guest device at the cloud server; and generate a stream of audio and video data at media streaming device based on the received instructions for display at a television or other displace in the multi-room accommodation.

In another aspect of the present invention a method of streaming audio and video data to a television within a multi-room accommodation is provided, the method comprising the steps of: providing a pool of media streaming devices; monitoring, by a multi-room accommodation router connected to an on-site local area network at the multi-room accommodation, data packet from an on-site local area network within said multi-room accommodation for a media streaming device connection request from a guest device connected to the on-site local area network; communicating, in response to the media streaming device connection request, a notification packet for the or each media streaming device from an off-site cloud server managing the pool of media streaming devices, wherein the notification packet comprises at least some authentic device description details and at least some modified data configured to show that the or each media streaming device is part of the on-site local area network at the multi-room accommodation; establishing a connection between the guest device and one of the media streaming devices in the pool of media streaming devices; receiving instructions for the media streaming device from the guest device at the cloud server; and generating a stream of audio and video data at the media streaming device based on the received instructions for display at the television or display in the multi-room accommodation.

The provisions of the plurality or pool of media streaming devices in a remote media streaming unit provides a way of streaming audio and video data to multiple televisions within a multi-room accommodation such as a hotel, or multiple televisions between different multi-room establishments, such as multiple hotels. This arrangement maximises the use of media streaming devices since one remote media streaming device may be used to stream audio and video data to different televisions at different times which reduces the overall number of media streaming devices needed to cater of the same number of televisions, this is especially beneficial when the system includes a plurality of multi-room accommodations in different times zones. Centralising the media streaming devices in a remote location reduces energy costs for the multi-room accommodation, it also simplifies the on-site networks within the multi-room accommodation making for easier maintenance.

By providing an intermediary which can monitor and modify data packets it is possible to convince guest devices connected to the on-site local area network that a media streaming device is present on the same local area network. It also provides a means to control operation of the media streaming unit to ensure optimal usage of each media streaming device.

The architecture used for the systems and method removes the constraints of the on-site network design and abstracts this so that media streaming devices may be re-used over and over again for different rooms.

The term multi-room accommodation may be considered a multi-room establishment which provides accommodation for multiple people separately. In some embodiments, it may be an individual room, such as a hotel room, or it may be a set of rooms forming a single unit such as a hotel suite or serviced apartments. Typically, the multi-room accommodation will include a number of rooms or units with each room or unit providing accommodation.

A guest device may be considered a device capable of connecting to the local area network, such as a smart phone, tablet, laptop or similar. The guest may be a guest of a hotel, a resident of a student accommodation, a resident of a senior living establishment or similar.

The multi-room accommodation may be a hotel. In such cases, features associated with the multi-room accommodation may be features associated with the hotel, for example, the multi-room accommodation router may be a hotel router, the virtual multi-room accommodation site container may be a virtual hotel site container etc.

The multi-room accommodation may be a plurality of serviced apartments. The multi-room accommodation may be student accommodation. The multi-room accommodation may be senior living accommodation. In such cases, in a similar fashion to above, features associated with the multi-room accommodation may be features associated with the serviced apartments, features associated with student accommodation etc.

The multi-room accommodation may comprise a plurality of televisions or similar displays, preferably a plurality in-room televisions or in-room displays. That is to say that a television or similar display is provided in each room of the multi-room accommodation.

Establishing a connection may be understood to mean pairing. Preferably the established connection, or pairing, is temporary. The system may be configured to monitor usage by a guest device, and after a predetermined time of inactivity the guest device is disconnected from the established connection, i.e. unpaired.

The virtual multi-room accommodation site container may be configured to perform packet filtering of the data packets from the on-site local area network of said multi-room accommodation. The virtual multi-room accommodation site container may be configured to perform packet manipulation of the data packets on the on-site local area network of said multi-room accommodation.

The system may be further configured to emulate the received instructions sent from the guest device. The emulated instructions may be for the media streaming device of the established connection.

The system may be further configured to pass through the received instructions sent from the guest device to the media streaming device of the established connection.

The content streaming system may be configured for use with a plurality of multi-room accommodations, for example a plurality of hotels. In some embodiments, the plurality of multi-room accommodations may be the same type of accommodation for example a hotel. In some embodiments, the plurality of multi-room accommodations may be mixed, for example hotels and student accommodation etc. A plurality of multi-room accommodation routers may be provided, each multi-room accommodation router being operably configured to connect to an on-site local area network at one multi-room accommodation of a plurality of multi-room accommodations. The cloud server may comprise a plurality of virtual multi-room accommodation site containers. Each virtual multi-room accommodation site container may correspond to one multi-room accommodation of the plurality of multi-room accommodations and be connected to the corresponding multi-room accommodation router.

The system may be configured so that one media streaming unit is connected to a plurality of virtual multi-room accommodation site containers. That is to say that a single media streaming unit may be accessible to each virtual multi-room accommodation site container of the plurality of virtual multi-room accommodation site containers.

The media streaming unit may support a large number of media streaming devices in the pool. The number of media streaming devices in the pool may be hundreds of devices, for example up to 300 or at least 300 media streaming devices. A plurality of media streaming units may be provided, with each media streaming unit providing a plurality of media streaming units in a pool. In such cases, there are multiple pools of media streaming devices.

The cloud server, when a virtualised cloud server, may support a number of virtual site containers. For example, up to 30 or more than 30 virtual multi-room accommodation site containers. In other embodiments, multiple virtualised cloud servers may be provided each supporting a plurality of virtual site containers.

A container may be a virtualised machine, preferably only virtualised to the software layers and above, more preferably the operating system and above. A container may be lightweight with software packages that comprises all dependencies to execute a software application. The dependencies may include system libraries, code packages, and operating system level applications among other things. The dependencies of the container may exist in stack levels that are higher than the operating system.

The cloud server may be a virtualised server mounted within a data centre server.

The cloud server may comprise a pool manager. The pool manager may be a virtual machine or the virtual server. A software-defined network (SDN) may be defined and maintained by the cloud server, preferably the virtual cloud server, more preferably the pool manager.

Guest device authentication may be provided. Preferably the cloud server may be configured to perform guest device authentication. More preferably, the pool manager may be configured to perform guest device authentication.

The cloud server may comprise a cache for storing information related to each media streaming device in the pool of media streaming devices. The stored information may comprise the device description details for each media streaming device of the plurality of media streaming devices. The device description details may comprise the location of each device description details. The location may be modified so that the media streaming device appears to be part of the on-site local area network of the multi-room accommodation. The cache may be accessible by the or each virtual multi-room accommodation site container.

A virtual private network (VPN) may be provided. The virtual private network may comprise the guest device, multi-room accommodation router, the cloud server and/or the media streaming unit. The VPN may also comprise all virtualised machines or virtualised computers, such as the pool manager and/or the virtual multi-room accommodation site container.

A plurality of televisions or displays, preferably a plurality of in-room televisions or a plurality of in-room displays may be provided. That is to say that each room within the multi-room accommodation may each have an in-room television or in-room display.

A television identification code may be provided. A display identification code may be provided. The identification code may be for disposal to the television or display in the multi-room accommodation. The identification code may comprise a unique ID and a security key for uniquely identifying the television or display to the system. The identification code may be a visual identification code, such as a Quick Read (QR) code. When there are a plurality of multi-room accommodations each with a plurality of rooms, each television in each multi-room accommodation will also be uniquely identifiable.

The cloud server may be configured to receive a message containing the unique ID and the security key. The cloud server may be configured to receive guest device details. The cloud server may be configured to associate the guest device and the television or display when it has received the unique ID, the security key and the guest device details. The cloud server may initially reserve one media streaming device or a set of media streaming devices for possibly establishing connection. Said media streaming devices may not have an established connection to another guest device on the same on-site local area network or another on-site local area network of a different multi-room accommodation.

The guest device may be provided with details of a single media streaming device or a set of media streaming devices. The set of media streaming devices may be a selection of media streaming devices which do not have a current established connection.

The system may monitor usage statistics of the plurality of media streaming devices in the media streaming unit. The system may optimise the media streaming unit, for example, the power consumption of the media streaming unit may be optimised based on the monitored usage statistics. In some embodiments, such as those where there is a plurality of media streaming units, the system may minimise stream latency between a specific media streaming unit and a specific multi-room accommodation. In other embodiments, the system may minimise stream latency between specific media streaming devices in the pool and a specific multi-room accommodation. Usage statistics may comprise stream latency information.

The system may determine which is the most optimal media streaming device to use for a given multi-room accommodation based on the usage statistics. The optimal media streaming device may be determined based on reduced latency.

The system may also monitor health of the media streaming devices within the media streaming unit.

A stored multi-room accommodation configuration may be provided. The stored multi-room accommodation configuration may comprise a graphical user interface for the multi-room accommodation. The virtual multi-room accommodation site container may comprise the stored multi-room accommodation configuration. The stored multi-room accommodation configuration may be loaded to the media streaming device prior to use at the multi-room accommodation. The stored multi-room accommodation configuration may be unloaded after use. The stored multi-room accommodation configuration may be loaded prior to or during the process of establishing the connection.

The media streaming devices may also be media casting devices.

The media streaming devices may be known media streaming devices, such as Chromecasts (RTM) or similar. Preferably, the media streaming devices are all Chromecasts (RTM).

The media streaming device may stream audio and video data through a secured content delivery network (CDN) network.

The media streaming device may stream audio and video data through the virtual private network.

The media streaming device may encode the audio and video data using known video and audio encoding techniques. The media streaming device streams audio and video data through known techniques.

The television may be an in-room television. The display may be an in-room display. The in-room television or in-room display may be connected to the on-site local area network of the multi-room accommodation. The in-room television or in-room display may be connected to an additional on-site local area network of the multi-room accommodation. The in-room television or in-room display may be connected to a network configured to provide audio and video data.

The system may authenticate the in-room television or in-room display. The authentication may be initially performed during commissioning, for example by associating the unique identification with the in-room television or in-room display. In other embodiments, authentication may be performed by using stored data associated with the in-room television or in-room display, the stored data may be used to identify that the in-room television or in-room display is associated with the on-site local area network.

The on-site local area network of the multi-room accommodation may be connected to a wide area network such as the internet.

The on-site local area network may be a subnet.

The media streaming device discovery request may be communicated through a MDNS (Multicast Domain Name System) message. The MDNS message sent may be a known in the art, for example, guest devices wanting to connect to a Chromecast (RTM) will communicate a M-Search *HTTP/1.1 packet to the router.

Typically, a media streaming device on the same local area network, would communicate through MDNS, for example, a NOTIFY * HTTP/1.1 packet is sent to announce the IP address and port that it is listening to and the location of its device description XML file. Typically, an Simply Service Discovery Protocol (SSDP) and/or Discovery and Launch (DIAL) protocols are used for device discovery.

In some embodiments, the announced IP address in the notification packet may be modified. In some embodiments, the listening port in the notification packet may be modified.

In the current systems and methods, the media streaming device and guest device are not part of the same subnetwork so the typical device discovery will not work. Therefore, an intermediary i.e. the cloud server, virtual multi-room accommodation site container and multi-room accommodation router is provided. The intermediary provides a way to monitor and modify data packets to make the guest device and/or the media streaming device believe they are part of the same local area network, i.e. the same subnetwork. For example, the NOTIFY * HTTP/1.1 packet may be modified such that it makes the media streaming device appear to be on the same network.

A virtual media streaming device may be provided in the cloud server. A plurality or pool of virtual media streaming devices may be provided, wherein each virtual media streaming device may correspond to one media streaming device in the media streaming unit. That is to say that a virtual media streaming device corresponds to a physical media streaming device. It should be understood that the term virtual media streaming device does not mean a fully virtualise machine or fully virtualised media streaming device but rather is all the information and data required for the cloud server, preferably the virtual multi-room accommodation site container, to pretend to be the physical media streaming device for the purposes of communications but not for streaming. That is to say that the cloud server, preferably the virtual multi-room accommodation site container, acts as a media streaming device for establishing a connection and receiving communications.

The multi-room accommodation router may be configured to interact with the on-site local area network at a packet level. The multi-room accommodation router may comprise software to connect to the virtual multi-room accommodation site container.

The on-site local area network may be a wireless local area network.

The virtual multi-room accommodation site container may be configured to monitor packets from the on-site virtual container. The virtual multi-room accommodation site container may be configured to perform packet filtering and packet manipulation of the data packets of the on-site local area network routed by the multi-room accommodation router. In some embodiments, the packet filtering and packet manipulation improves the integration of the system since it can interact with on-site local area networks of varying configurations, as well as modify data packets to allow the guest device and media streaming device to establish a connection.

The system and method may be considered a way of providing a means for a media streaming device to be used by a guest device when both devices are on different subnetworks. The system and method provide a way of manipulating data packets by falsifying information and details so that the media streaming device appears as though it is connected to the same subnetwork as the guest device, i.e. it appears as connected to the on-site local area network.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a schematic representation of a hotel content streaming system according to the prior art;
Figure 2 shows a schematic representation of an embodiment according to the present invention; and
Figure 3 shows a schematic representation of an embodiment according to the present invention.

### DESCRIPTION OF PREFERRED EMBODIMENTS

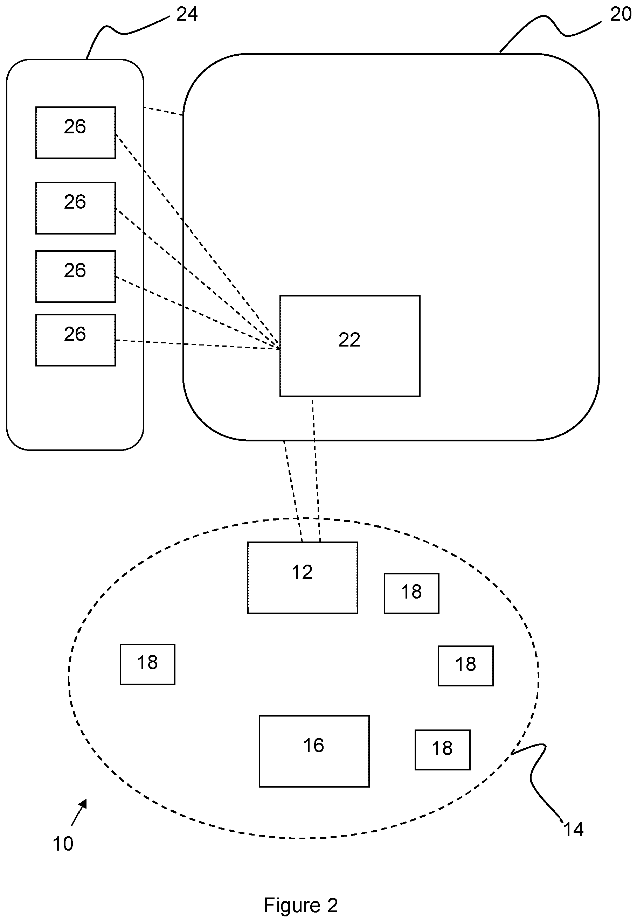

Referring to Figures 2, a system for streaming audio and video content is generally indicated at 10. In the current example embodiment, the system 10 is described as used with a hotel, but it may be used with other multi-room establishments such as student accommodation.

A hotel router 12 is provided. The hotel router is connected to an on-site local area network (LAN) 14 at a hotel, preferably a wireless local area network, i.e. a wireless area network (WLAN) provided at the hotel premises. The on-site local area network 14 may be a High Speed Internet Access Local Area Network (HSIA LAN). A gateway 16, such as a router, is connected to the on-site LAN and provides access to a wide area network such as the internet.

Typically, a hotel guest will join the on-site local area network 14 with their guest device 18, such as a smart phone, tablet, laptop or similar, so as to have access to the hotel's network and the internet. This is achieved through a number of well-known means and implementations.

The hotel will have a number of guest rooms, each room being provided with a television (TV). The in-room TV is provided to the hotel guest for entertainment purposes. The TV will be connected to a network within the hotel, preferably a network which has excess to the internet, for example the on-site local area network 14. The TV will be configured to receive a stream of audio and video data.

A remote, i.e. off-site, cloud server 20 is provided. The cloud server may comprise a virtual server and/or pool manager in some embodiments to control and manage the functions described.

A virtual container 22 is provided for each hotel and communicatively connected to the hotel router 12. The virtual hotel site container 22 comprises lightweight software packages that comprises all dependencies to execute one or more software applications. The dependencies may include system libraries, code packages, and operating system level applications among other things.

A media streaming unit 24 is provided. The media streaming unit 24 is provided off-site, i.e. in a data centre, away from the hotel premises and may be operably configured to communicate with the cloud server 20 and/or the virtual hotel site container 22.

A plurality of media streaming devices 26 are provided and form a pool of media streaming devices. Each media streaming device 26 is connected to the media streaming unit 24 and housed within an enclosure of the media streaming unit 24.

The media streaming unit 24 is communicatively connected to the cloud server 20 and the virtual hotel site container 22. The media streaming unit 24 is configured to direct data and instructions between the or each media streaming device 26 and the cloud server 20 and/or the virtual hotel site container 22.

A virtual private network is established between the hotel router 12, the virtual hotel site container 22, cloud server 20, media streaming unit 24 and media streaming device 26.

The method of establishing a connection between a guest device, media streaming device and television will now be briefly described.

A hotel guest wishing to stream content, such as movies or other audio and video data, accesses the system 10 by using a unique identification code available within the hotel room. In the current embodiment, a quick read (QR) code is provided which includes a unique identification code and a security key. During commission of the system at the hotel, the QR code is associated with the specific TV in the room. The hotel guest uses their device 18 to scan the QR code which associates the device and TV with the system.

The cloud server 20 may initially determine which of the media streaming devices 26 in the pool are available for use. The initial determination may also be based on which media streaming devices are currently not in use or other factors such as which media streaming device will provide a low latency. The cloud server 20 may initially reserve one media streaming device 26 or a set of media streaming devices for potential use by the guest device 18.

The guest device 18 will initiate a connection request to a media streaming device 26, for example from pressing an icon on the display within an application running on the guest device. The guest device 18 will send out a MDNS data packet which contains the connection request.

The hotel router 12 monitors data packet transmission through the on-site LAN 14 for MDNS packets and connection requests. Upon receipt of the relevant data packet, the hotel router 12 will notify the cloud server 20, specifically the virtual hotel site container 22, of the connection request, for example, by forwarding the data packet containing the connection request.

In response to the connection request, a reply to the guest device 18 is communicated through the hotel router 12. In the current embodiment, the cloud server 20 and/or the virtual hotel site container 22 effectively pretends to be the or each media streaming device 26 in the pool and modify responses so that the or each media streaming devices appears to be connected to the same on-site LAN 14 as the guest device 18.

The authentic details and responses of the initially reserved one media streaming device 26 or the set of media streaming devices are used when responding to the connection request.

A cache of the relevant information and data for each media streaming device 26 within the pool is provided to effectively pretend to be on the same on-site LAN 14. In the current embodiment, the cache comprises authentic information and data from each media streaming device 26. In some embodiments, an authentic notification data packet from each media streaming device 26 may be stored and authentic device description details or the location of the device description details may be stored in the cache. The device description details or location of the device description details may be modified prior to transmitting to the guest device 18 ensure that the or media streaming device 26 will appear as though it is connected to the on-site LAN 14. The authentic notification data packet stored in the cache may be modified so to appear as if the or each media streaming device 26 is connected to the on-site LAN 14.

The cloud server 20, and/or the virtual container 22, modifies the response to the connection request so that when transmitted back through the hotel router 12 it appears to have come from the same subnet, effectively falsifying the network it is part of.

In some embodiments, the cloud server 20 and/or the virtual hotel site container 22, may effectively act as virtual media streaming devices, or in other embodiments virtual media streaming devices may be provided. The cloud server 20 and/or the virtual hotel site container 22 act as virtual media streaming devices in the sense that they may respond as if they are authentic media streaming devices. In essence, they are not fully virtualised media streaming devices since they may not stream audio and video data, however, they may communicate with the guest device 18 as if they are authentic media streaming devices 26 on the same subnet. The virtual cloud server and virtual container are to be understood in the usual sense to the person skilled in the art.

The authentic details and responses of the initially reserved one media streaming device 26 or the set of media streaming devices are used when responding to the connection request. The response is sent as if it was a reply for a media streaming device on the same subnet.

A connection is established between the guest device 18 and one of the media streaming device 26 through the virtual hotel site container 22 and/or the cloud server 20. The guest device and the media streaming device 26 are effectively paired together for the period of use. If a set of reserved media streaming devices is sent, the guest device may determine which it may establish a connection with.

The hotel guest controls the application running on their guest device 18 to start streaming content to the in-room television. Instructions are sent to the cloud server 20, more specifically the virtual hotel site container 22. Typically, these instructions will be sent through the on-site LAN 14 and intercepted by the hotel router 12.

In response to the received instructions, the cloud server 20 and/or virtual hotel site container 22 will pass through the instructions to the paired media streaming device 26. In some cases, the cloud server 20 and/or virtual hotel site container 22 will emulate the received instructions instead of passing them through.

The connected media streaming device 26 generates a stream of audio and video data. The data is encoded and transmitted to the identified in-room TV. The stream may be transmitted over a content distribution network (CDN). In some embodiments, it may be transmitted back through the cloud server 20 and the router 12. Various encoding and streaming processes are known in the art and could be readily used.

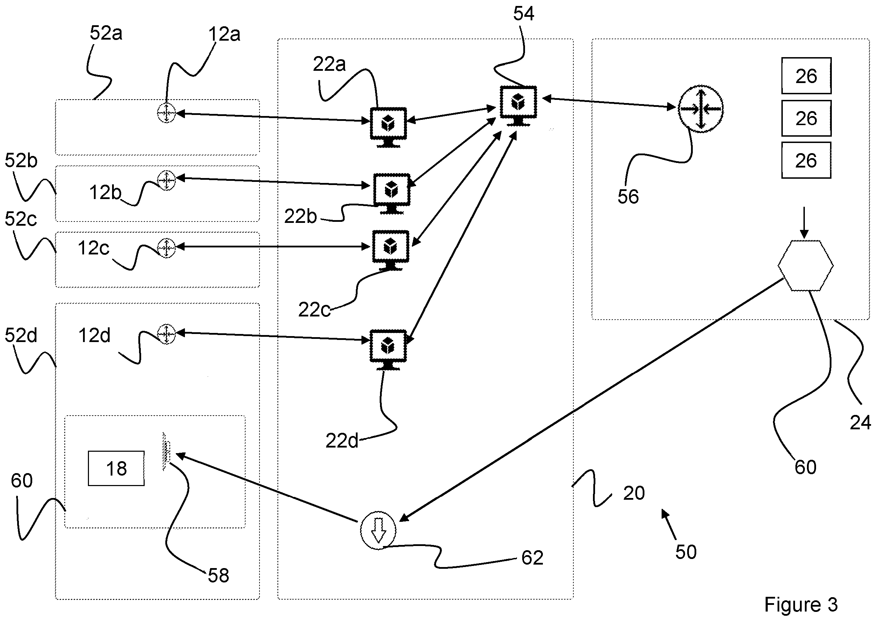

Referring to Figure 3, a system streaming audio and video data is generally indicated at 50. The system 50 in Figure 3 operates in the same fashion as that shown in Figure 2 but is scaled so as to provide for a plurality of hotels which have a plurality of guest rooms with in-room TVs. The system in Figure 3 is applicable to other multi-room accommodations.

In the embodiment shown in Figure 3, there are four separate hotels 52a, 52b, 52c, 52d. Although not shown, each hotel 52a, 52b, 52c, 52d has an on-site local area network.

A hotel router 12a, 12b, 12c and 12d is provided for each hotel 52a, 52b, 52c, 52d and is part of the on-site local area network at said hotel.

Four virtual hotel site containers 22a, 22b, 22c, 22d are provided. Each virtual hotel site container 22a, 22b, 22c, 22d corresponds to a single hotel 52a, 52b, 52c, 52d and is connected to the respective hotel router 12a, 12b, 12c and 12d.

An off-site cloud server 20 disposed in a data centre remote to the hotels 52a, 52b, 52c, 52d is provided. The cloud server 20 hosts each of the four virtual hotel site containers 22a, 22b, 22c, 22d and a virtual pool server 54. The cloud server comprises a software defined network between the virtual containers 22a, 22b, 22c, 22d and the virtual pool server 54.

A media streaming unit 24 is off-site with respect to the hotel and disposed in a data centre. A plurality of media streaming devices 26 are provided with the media streaming unit 24. A streaming device router 56 is provided with the media streaming unit and connected to each media streaming device 26. The streaming device router 56 directs communications to the relevant media streaming device 26.

In the embodiment shown in Figures 3, the method of connection between guest device 18, media streaming device 26 and television 58 within a room 60 is effectively the same as discussed above. With the exception that the virtual pool server 54 provides a link between the virtual hotel site containers 22a, 22b, 22c, 22d.

In a similar fashion to that described above, the media streaming device 26 encodes audio and video data through an encoder means 60 and streams said data through a content distribution network 62 to the identified TV 58.

The embodiments described above are especially advantageous as it requires one small hotel router per hotel and no additional wireless local area networks or specific in room technologies other than the existing in-room television. The remote cloud server offered orchestrates which media streaming devices (e.g. Chromecasts) are allocated to which guests, the same serves builds a per guest network dynamically over a secure VPN so that the guest device can communicate with the device. This reduces the equipment required at the hotel and will improve adoption since it can be integrated into the hotel more quickly.

Additionally, the embodiments ensure that the constraints of each hotel's network design are removed and the system abstracts this so that media streaming devices may be re-used over and over again. This is especially advantageous since the media streaming devices go unused when the hotel room is unoccupied, or the in-room television with connected media streaming device is not used.

Great benefit can also be found in the embodiments when used with a plurality of hotels, especially when each hotel in the plurality of hotels are in different time zones, since it is possible for one media streaming device to be used at different times by different hotels.

The embodiments described above are provided by way of example only, and various changes and modifications will be apparent to persons skilled in the art without departing from the scope of the present invention as defined by the appended claims.

## Claims

1. A content streaming system (10) for streaming audio and video data to a television within a multi-room accommodation, the system comprising:
a multi-room accommodation router (12) being operably configured to connect to an on-site local area network (14) at a multi-room accommodation, the multi-room accommodation router (12) being configured to monitor, interact with and forward data packets on the local area network (14) of said multi-room accommodation;
an identification code for disposal to the television in the multi-room accommodation, wherein the identification code comprises a unique ID and a security key for uniquely identifying the television in the multi-room accommodation to the system (10);
a media streaming unit (24) disposed in a data centre that is off-site with respect to and remote from the multi-room accommodation, the media streaming unit (24) including a plurality of media streaming devices (26), each media streaming device (26) being operable to encode and transmit audio and video data to the television within the multi-room accommodation; and a cloud server (20) disposed off-site and remote with respect to the multi-room accommodation, the cloud server (20) comprising a virtual multi-room accommodation site container (22) communicatively connected to the multi-room accommodation router (12) and to the media streaming unit (24), the cloud server (20) being configured to receive a message containing the unique ID and the security key from a guest device (18) and, in response, initially reserve one or more media streaming devices (26) from the plurality of media streaming devices (26) for use by the guest device (18);
wherein the system (10) is configured to:
monitor data packets from the on-site local area network (14) of said multi-room accommodation for media streaming device connection requests from the guest device (18) connected to the on-site local area network (14) of said multi-room accommodation;
communicate, in response to media streaming device connection request, a notification packet for the or each media streaming device (26) from the cloud server (20) to the guest device (18) connected to the on-site local area network (14) through the multi-room accommodation router (12), wherein the notification packet comprises at least some authentic device description details and at least some modified data configured to show that the or each media streaming device (26) is connected to the on-site local area network (14) of the multi-room accommodation;
establish connection between the guest device (18) on the on-site local area network (14) and one of the media streaming devices (26) in the off-site media streaming unit (24) through the cloud server (20);
receive instructions for the media streaming device (26) from the guest device (18) at the cloud server (20); and
generate a stream of audio and video data at the connected media streaming device (26) based on the received instructions, and encode and transmit the audio and video data to the identified television in the multi-room accommodation for display at a television in the multi-room accommodation.

2. The content streaming system as claimed in claim 1, in which the virtual multi-room accommodation site container (22) is configured to perform packet filtering of the data packets from the on-site local area network (14) of said multi-room accommodation and packet manipulation of the data packets from the on-site local area network (14) of said multi-room accommodation.

3. The content streaming system as claimed in claim 1 or claim 2, in which the system is further configured to emulate or passthrough the received instructions sent from the guest device (18) to the media streaming device (26) of the established connection.

4. The content streaming system as claimed in any preceding claim, comprising a plurality of multi-room accommodation routers (12), each multi-room accommodation router (12) being operably configured to connect to an on-site local area network (14) at one multi-room accommodation of a plurality of multi-room accommodations; wherein the cloud server (20) comprises a plurality of virtual multi-room accommodation site containers (22), each virtual multi-room accommodation site container (22) corresponding to one multi-room accommodation of the plurality of multi-room accommodations and being connected to the corresponding multi-room accommodation router (12).

5. The content streaming system as claimed in claim 4, in which each virtual multi-room accommodation site container (22) has access to the media streaming unit (24).

6. The content streaming system as claimed in any preceding claim, in which the device description details for each media streaming device (26) of the plurality of media streaming devices (26) are stored in a cache of the cloud server (20).

7. The content streaming system as claimed in any preceding claim, in which a virtual private network is formed between the guest device (18), multi-room accommodation router (12), the cloud server (20) and the media streaming unit (24).

8. The content streaming system as claimed in any preceding claim, in which the system is further configured to monitor usage statistics of the plurality of media streaming devices (26) in the media streaming unit (24) and optimise power consumption of the media streaming unit (24) based on the monitored usage statistics.

9. The content streaming system as claimed in any preceding claim, in which the virtual multi-room accommodation site container (22) comprises a stored multi-room accommodation configuration, wherein the stored multi-room accommodation configuration is loaded to the connected media streaming device (26) during use at the multi-room accommodation and unloaded after use, wherein the multi-room accommodation configuration includes a user interface.

10. A method of streaming audio and video data to a television within a multi-room accommodation, the method comprising the steps of:
providing a pool of media streaming devices (26) disposed in a data centre in an off-site location remote to the multi-room accommodation;
monitoring, by a multi-room accommodation router (12) connected to an on-site local area network (14) at the multi-room accommodation, data packets from an on-site local area network (14) within said multi-room accommodation for a media streaming device (26) connection request from a guest device (18) connected to the on-site local area network (14);
providing an identification code for disposal to the television in the multi-room accommodation, wherein the identification code comprises a unique ID and a security key for uniquely identifying the television in the multi-room accommodation to the system;
communicating, in response to the media streaming device connection request, a notification packet for the or each media streaming device (26) from an off-site cloud server (20) connected to the pool of media streaming devices (26), the off-site cloud server (20) is disposed remote with respect to the multi-room accommodation and comprises a virtual multi-room accommodation site container (22) communicatively connected to the multi-room accommodation router (12) and the pool of media streaming devices (26), wherein the notification packet comprises at least some authentic device description details and at least some modified data configured to show that the or each media streaming device (26) is connected to the on-site local area network (14) of the multi-room accommodation, the cloud server (20) being configured to receive a message containing the unique ID and the security key from a guest device (18) and, in response, initially reserve one or more media streaming devices (26) from the plurality of media streaming devices (26) for use by the guest device (18);
establishing a connection between the guest device (18) and one of the media streaming devices (26) in the pool of media streaming devices;
receiving instructions for the media streaming device (26) from the guest device (18) at the cloud server (20); and
generating a stream of audio and video data at the media streaming device (26) based on the received instructions, and encoding and transmitting the audio and video data to the identified television in the multi-room accommodation for display at the television in the multi-room accommodation.

11. The method as claimed in claim 11, in which the virtual multi-room accommodation site container (22) is configured to perform packet filtering of the data packets from the on-site local area network (14) of said multi-room accommodation and packet manipulation of the data packets from the on-site local area network (14) of said multi-room accommodation.

12. The method as claimed in claim 11 and claim 12, in which instructions for the media streaming device (26) received by the virtual multi-room accommodation site container (22) are emulated or passed through to the media streaming device (26) of the established connection.

13. The method as claimed in any of claims 11 to 13, in which the device description details for each media streaming device (26) are stored in a cache of the cloud server (20) and are accessible by the virtual multi-room accommodation site container (22).

## Patentansprüche

1. Inhaltsstreamingsystem (10) zum Streamen von Audio- und Videodaten an ein Fernsehgerät innerhalb einer Mehrraumunterkunft, wobei das System umfasst:
einen Mehrraumunterkunfts-Router (12), der betriebsbereit so konfiguriert ist, dass er sich mit einem lokalen Netzwerk (14) vor Ort in einer Mehrraumunterkunft verbindet, wobei der Mehrraumunterkunfts-Router (12) so konfiguriert ist, dass er Datenpakete in dem lokalen Netzwerk (14) der Mehrraumunterkunft überwacht, mit ihnen interagiert und diese weiterleitet;
einen Identifizierungscode zur Bereitstellung an das Fernsehgerät in der Mehrraumunterkunft, wobei der Identifizierungscode eine eindeutige ID und einen Sicherheitsschlüssel zur eindeutigen Identifizierung des Fernsehgeräts in der Mehrraumunterkunft gegenüber dem System (10) umfasst;
eine Medienstreaming-Einheit (24), die in einem Rechenzentrum angeordnet ist, das sich außerhalb der Mehrraumunterkunft befindet und von dieser entfernt ist, wobei die Medienstreaming-Einheit (24) eine Vielzahl von Medienstreaming-Vorrichtungen (26) einschließt, wobei jede Medienstreaming-Vorrichtung (26) so betreiben werden kann, dass sie Audio- und Videodaten verschlüsseln und an das Fernsehgerät innerhalb der Mehrraumunterkunft überträgt; und
einen Cloud-Server (20), der extern und ferngesteuert in Bezug auf die Mehrraumunterkunft angeordnet ist, wobei der Cloud-Server (20) einen virtuellen Container (22) für Mehrraumunterkünfte umfasst, der kommunikativ mit dem Mehrraumunterkunfts-Router (12) und der MedienstreamingEinheit (24) verbunden ist, wobei der Cloud-Server (20) so konfiguriert ist, dass er eine Nachricht empfängt, die die eindeutige ID und den Sicherheitsschlüssel von einer Gastvorrichtung (18) enthält, und als Reaktion zunächst eine oder mehrere Medienstreaming-Vorrichtungen (26) aus der Vielzahl von Medienstreaming-Vorrichtungen (26) zur Verwendung durch die Gastvorrichtung (18) reserviert;
wobei das System (10) für Folgendes konfiguriert ist:
Überwachen von Datenpaketen aus dem lokalen Netzwerk (14) vor Ort der Mehrraumunterkunft für Verbindungsanfragen von Medienstreaming-Vorrichtungen von der Gastvorrichtung (18), die mit dem lokalen Netzwerk (14) vor Ort der Mehrraumunterkunft verbunden ist;
als Antwort auf eine Verbindungsanfrage einer Medienstreaming-Vorrichtung, Übermitteln eines Benachrichtigungspakets für die oder jede Medienstreaming-Vorrichtung (26) von dem Cloud-Server (20) an die mit dem lokalen Netzwerk (14) vor Ort verbundene Gastvorrichtung (18) über den Mehrraumunterkunfts-Router (12), wobei das Benachrichtigungspaket mindestens einige authentische Details zur Vorrichtungsbeschreibung und mindestens einige modifizierte Daten umfasst, die so konfiguriert sind, dass die oder jede Medienstreaming-Vorrichtung (26) an das lokale Netzwerk (14) vor Ort der Mehrraumunterkunft verbunden ist;
Herstellen einer Verbindung zwischen der Gastvorrichtung (18) in dem lokalen Netzwerk (14) vor Ort und einer der Medienstreaming-Vorrichtungen (26) in der externen Medienstreaming-Einheit (24) durch den Cloud-Server (20);
Empfangen von Anweisungen für die Medienstreaming-Vorrichtung (26) von der Gastvorrichtung (18) an dem Cloud-Server (20); und
Erzeugen eines Audio- und Videodatenstreams auf der verbundenen Medienstreaming-Vorrichtung (26) basierend auf den empfangenen Anweisungen und Verschlüsseln und Übertragen der Audio- und Videodaten an das identifizierte Fernsehgerät in der Mehrraumunterkunft zur Anzeige auf einem Fernsehgerät in der Mehrraumunterkunft.

2. Inhaltsstreamingsystem nach Anspruch 1, wobei der virtuelle Container (22) für Mehrraumunterkünfte so konfiguriert ist, dass er eine Paketfilterung der Datenpakete aus dem lokalen Netzwerk (14) vor Ort der Mehrraumunterkunft und eine Paketmanipulation der Datenpakete aus dem lokalen Netzwerk (14) der Mehrraumunterkunft durchführt.

3. Inhaltsstreamingsystem nach Anspruch 1 oder 2, wobei das System ferner so konfiguriert ist, dass es die empfangenen Anweisungen, die von der Gastvorrichtung (18) an die Medienstreaming-Vorrichtung (26) der hergestellten Verbindung gesendet werden, emuliert oder weiterleitet.

4. Inhaltsstreamingsystem nach einem der vorhergehenden Ansprüche, umfassend eine vielzahl von Mehrraumunterkunfts-Routern (12), wobei jeder Mehrraumunterkunfts-Router (12) betriebsbereit so konfiguriert ist, dass er sich mit einem lokalen Netzwerk (14) vor Ort in einer Mehrraumunterkunft einer Vielzahl von Mehrraumunterkünften verbindet; wobei der Cloud-Server (20) eine Vielzahl von virtuellen Containern (22) für Mehrraumunterkünfte umfasst, wobei jeder virtuelle Container (22) für Mehrraumunterkünfte einer Mehrraumunterkunft der Vielzahl von Mehrraumunterkünften entspricht und mit dem entsprechenden Mehrraumunterkunft-Router (12) verbunden ist.

5. Inhaltsstreamingsystem nach Anspruch 4, wobei jeder virtuelle Container (22) für Mehrraumunterkünfte Zugriff auf die Medienstreaming-Einheit (24) hat.

6. Inhaltsstreamingsystem nach einem der vorhergehenden Ansprüche, wobei die Details zur Vorrichtungsbeschreibung für jede Medienstreaming-Vorrichtung (26) der Vielzahl von Medienstreaming-Vorrichtungen (26) in einem Cache des Cloud-Servers (20) gespeichert sind.

7. Inhaltsstreamingsystem nach einem der vorhergehenden Ansprüche, wobei ein virtuelles privates Netzwerk zwischen der Gastvorrichtung (18), dem Mehrraumunterkunts-Router (12), dem Cloud-Server (20) und der Medienstreamingeinheit (24) gebildet ist.

8. Inhaltsstreamingsystem nach einem der vorhergehenden Ansprüche, wobei das System ferner so konfiguriert ist, dass es die Nutzungsstatistiken der Vielzahl von Medienstreaming-Vorrichtung (26) in der MedienstreamingEinheit (24) überwacht und den Stromverbrauch der Medienstreaming-Einheit (24) basierend auf den überwachten Nutzungsstatistiken optimiert.

9. Inhaltsstreamingsystem nach einem der vorhergehenden Ansprüche, wobei der virtuelle Container (22) für die Mehrraumunterkünfte eine gespeicherte Mehrraumunterkunfts-Konfiguration umfasst, wobei die gespeicherte Mehrraumunterkunfts-Konfiguration während der Verwendung in der Mehrraumunterkunft in die verbundene Medienstreaming-Vorrichtung (26) geladen und nach der Verwendung entladen wird, wobei die Mehrraumunterkunfts-Konfiguration eine Benutzeroberfläche umfasst.

10. Verfahren zum Streamen von Audio- und Videodaten an ein Fernsehgerät innerhalb einer Mehrraumunterkunft, wobei das Verfahren die Schritte umfasst:
Bereitstellen eines Pools von Medienstreaming-Vorrichtungen (26), die in einem Rechenzentrum an einem externen Standort außerhalb der Mehrraumunterkunft angeordnet sind;
Überwachen von Datenpaketen aus einem lokalen Netzwerk (14) vor Ort innerhalb der Mehrraumunterkunft für eine Verbindungsanfrage einer Medienstreaming-Vorrichtung (26) von einer Gastvorrichtung (18), die mit dem lokalen Netzwerk (14) vor Ort verbunden ist, durch einen Mehrraumunterkunfts-Router (12), der mit einem lokalen Netzwerk (14) vor Ort verbunden ist;
Bereitstellen eines Identifizierungscodes zur Bereitstellung an das Fernsehgerät in der Mehrraumunterkunft, wobei der Identifizierungscode eine eindeutige ID und einen Sicherheitsschlüssel zur eindeutigen Identifizierung des Fernsehgeräts in der Mehrraumunterkunft gegenüber dem System umfasst;
als Antwort auf die Verbindungsanfrage einer Medienstreaming-Vorrichtung, Übermitteln eines Benachrichtigungspakets für die oder jede Medienstreaming-Vorrichtung (26) von einem externen Cloud-Server (20), der mit dem Pool von Medienstreaming-Vorrichtungen (26) verbunden ist, wobei der externe Cloud-Server (20) in Bezug auf die Mehrraumunterkunft entfernt angeordnet ist und einen virtuellen Container (22) für die Mehrraumunterkunft umfasst, der kommunikativ mit dem Mehrraumunterkunfts-Router (12) und dem Pool von Medienstreaming-Vorrichtungen (26) verbunden ist, wobei das Benachrichtigungspaket mindestens einige authentische Details zur Vorrichtungsbeschreibung und mindestens einige modifizierte Daten umfasst, die so konfiguriert sind, dass sie zeigen, dass die oder jede Medienstreaming-Vorrichtung (26) mit dem lokalen Netzwerk (14) vor Ort der Mehrraumunterkunft verbunden ist, wobei der Cloud-Server (20) so konfiguriert ist, dass er eine Nachricht empfängt, die die eindeutige ID und den Sicherheitsschlüssel von einer Gastvorrichtung (18) enthält, und als Reaktion zunächst eine oder mehrere Medienstreaming-Vorrichtungen (26) aus der Vielzahl von Medienstreaming-Vorrichtungen (26) zur Verwendung durch die Gastvorrichtung (18) reserviert;
Herstellen einer Verbindung zwischen der Gastvorrichtung (18) und einer der Medienstreaming-Vorrichtungen (26) in dem Pool von Medienstreaming-Vorrichtungen;
Empfangen von Anweisungen für die Medienstreaming-Vorrichtung (26) von der Gastvorrichtung (18) an dem Cloud-Server (20); und
Erzeugen eines Audio- und Videodatenstreams auf der verbundenen Medienstreaming-Vorrichtung (26) basierend auf den empfangenen Anweisungen, und Verschlüsseln und Übertragen der Audio- und Videodaten an das identifizierte Fernsehgerät in der Mehrraumunterkunft zur Anzeige auf dem Fernsehgerät in der Mehrraumunterkunft.

11. Verfahren nach Anspruch 11, wobei der virtuelle Container (22) für die Mehrraumunterkunft so konfiguriert ist, dass er eine Paketfilterung der Datenpakete aus dem lokalen Netzwerk (14) vor Ort der Mehrraumunterkunft und eine Paketmanipulation der Datenpakete aus dem lokalen Netzwerk (14) vor Ort der Mehrraumunterkunft durchführt.

12. Verfahren nach Anspruch 11 und Anspruch 12, wobei Anweisungen für die von dem virtuellen Container (22) für die Mehrraumunterkunft empfangene Medienstreaming-Vorrichtung (26) emuliert oder an die Medienstreaming-Vorrichtung (26) der hergestellten Verbindung weitergeleitet werden.

13. Verfahren nach einem der Ansprüche 11 bis 13, wobei die Details zur Vorrichtungsbeschreibung für jede Medienstreaming-Vorrichtung (26) in einem Cache des Cloud-Servers (20) gespeichert sind und von dem virtuellen Container (22) für die Mehrraumunterkunft zugänglich sind.

## Revendications

1. Système (10) de diffusion de contenu pour diffuser des données audio et vidéo vers un téléviseur au sein d'un hébergement multi-pièces, le système comprenant :
un routeur d'hébergement multi-pièces (12) configuré de manière fonctionnelle pour se connecter à un réseau local (14) sur site dans un hébergement multi-pièces, le routeur d'hébergement multi-pièces (12) étant configuré pour surveiller, interagir avec et transmettre des paquets de données sur le réseau local (14) dudit hébergement multi-pièces ;
un code d'identification destiné à être attribué au téléviseur dans l'hébergement multi-pièces, dans lequel le code d'identification comprend un ID unique et une clé de sécurité pour identifier de manière unique le téléviseur dans l'hébergement multi-pièces auprès du système (10) ;
une unité de diffusion multimédia (24) disposée dans un centre de données qui est hors site par rapport à et à distance de l'hébergement multi-pièces, l'unité de diffusion multimédia (24) comprenant une pluralité de dispositifs de diffusion multimédia (26), chaque dispositif de diffusion multimédia (26) étant apte à coder et à transmettre des données audio et vidéo vers le téléviseur au sein de l'hébergement multi-pièces ; et
un serveur en nuage (20) disposé hors site et à distance par rapport à l'hébergement multi-pièces, le serveur en nuage (20) comprenant un conteneur (22) de site virtuel d'hébergement multi-pièces connecté en communication au routeur d'hébergement multi-pièces (12) et à l'unité de diffusion multimédia (24), le serveur en nuage (20) étant configuré pour recevoir un message contenant l'ID unique et la clé de sécurité depuis un dispositif invité (18) et, en réponse, réserver initialement un ou plusieurs dispositifs de diffusion multimédia (26) parmi la pluralité de dispositifs de diffusion multimédia (26) à des fins d'utilisation par le dispositif invité (18) ;
dans lequel le système (10) est configuré pour :
surveiller des paquets de données provenant du réseau local (14) sur site dudit hébergement multi-pièces pour des requêtes de connexion de dispositif de diffusion multimédia provenant du dispositif invité (18) connecté au réseau local (14) sur site dudit hébergement multi-pièces ;
communiquer, en réponse à une requête de connexion de dispositif de diffusion multimédia, un paquet de notification pour le ou chaque dispositif de diffusion multimédia (26) depuis le serveur en nuage (20) vers le dispositif invité (18) connecté au réseau local (14) sur site par l'intermédiaire du routeur d'hébergement multi-pièces (12), dans lequel le paquet de notification comprend au moins certains détails de description authentique de dispositif et au moins certaines données modifiées configurées pour indiquer que le ou chaque dispositif de diffusion multimédia (26) est connecté au réseau local (14) sur site de l'hébergement multi-pièces ;
établir une connexion entre le dispositif invité (18) sur le réseau local (14) sur site et l'un des dispositifs de diffusion multimédia (26) dans l'unité de diffusion multimédia (24) hors site par l'intermédiaire du serveur en nuage (20) ;
recevoir des instructions pour le dispositif de diffusion multimédia (26) depuis le dispositif invité (18) au niveau du serveur en nuage (20) ; et
générer un flux de données audio et vidéo au niveau du dispositif de diffusion multimédia (26) connecté sur la base des instructions reçues, et coder et transmettre les données audio et vidéo au téléviseur identifié dans l'hébergement multi-pièces à des fins d'affichage sur un téléviseur dans l'hébergement multi-pièces.

2. Système de diffusion de contenu selon la revendication 1, dans lequel le conteneur (22) de site virtuel d'hébergement multi-pièces est configuré pour effectuer un filtrage de paquets des paquets de données provenant du réseau local (14) sur site dudit hébergement multi-pièces et une manipulation de paquets des paquets de données provenant du réseau local (14) sur site dudit hébergement multi-pièces.

3. Système de diffusion de contenu selon la revendication 1 ou la revendication 2, dans lequel le système est en outre configuré pour émuler ou transmettre directement les instructions reçues envoyées depuis le dispositif invité (18) au dispositif de diffusion multimédia (26) de la connexion établie.

4. Système de diffusion de contenu selon l'une quelconque des revendications précédentes, comprenant une pluralité de routeurs d'hébergement multi-pièces (12), chaque routeur d'hébergement multi-pièces (12) étant configuré de manière fonctionnelle pour se connecter à un réseau local (14) sur site au niveau d'un hébergement multi-pièces d'une pluralité d'hébergements multi-pièces ; dans lequel le serveur en nuage (20) comprend une pluralité de conteneurs (22) de site virtuel d'hébergement multi-pièces, chaque conteneur (22) de site virtuel d'hébergement multi-pièces correspondant à un hébergement multi-pièces de la pluralité d'hébergements multi-pièces et étant connecté au routeur d'hébergement multi-pièces (12) correspondant.

5. Système de diffusion de contenu selon la revendication 4, dans lequel chaque conteneur (22) de site virtuel d'hébergement multi-pièces a accès à l'unité de diffusion multimédia (24).

6. Système de diffusion de contenu selon l'une quelconque des revendications précédentes, dans lequel les détails de description de dispositif pour chaque dispositif de diffusion multimédia (26) de la pluralité de dispositifs de diffusion multimédia (26) sont stockés dans un cache du serveur en nuage (20).

7. Système de diffusion de contenu selon l'une quelconque des revendications précédentes, dans lequel un réseau privé virtuel est formé entre le dispositif invité (18), le routeur d'hébergement multi-pièces (12), le serveur en nuage (20) et l'unité de diffusion multimédia (24).

8. Système de diffusion de contenu selon l'une quelconque des revendications précédentes, dans lequel le système est en outre configuré pour surveiller les statistiques d'utilisation de la pluralité de dispositifs de diffusion multimédia (26) dans l'unité de diffusion multimédia (24) et optimiser la consommation d'énergie de l'unité de diffusion multimédia (24) sur la base des statistiques d'utilisation surveillées.

9. Système de diffusion de contenu selon l'une quelconque des revendications précédentes, dans lequel le conteneur (22) de site virtuel d'hébergement multi-pièces comprend une configuration d'hébergement multi-pièces stockée, dans lequel la configuration d'hébergement multi-pièces stockée est chargée sur le dispositif de diffusion multimédia (26) connecté lors d'une utilisation au niveau de l'hébergement multi-pièces et déchargée après utilisation, dans lequel la configuration d'hébergement multi-pièces comprend une interface utilisateur.

10. Procédé de diffusion de données audio et vidéo vers un téléviseur au sein d'un hébergement multi-pièces, le procédé comprenant les étapes suivantes :
la fourniture d'un pool de dispositifs de diffusion multimédia (26) disposés dans un centre de données à un emplacement hors site distant de l'hébergement multi-pièces ;
la surveillance, par un routeur d'hébergement multi-pièces (12) connecté à un réseau local (14) sur site au niveau de l'hébergement multi-pièces, de paquets de données provenant d'un réseau local (14) sur site au sein dudit hébergement multi-pièces pour une requête de connexion d'un dispositif de diffusion multimédia (26) provenant d'un dispositif invité (18) connecté au réseau local (14) sur site ;
la fourniture d'un code d'identification destiné à être attribué au téléviseur dans l'hébergement multi-pièces, dans lequel le code d'identification comprend un ID unique et une clé de sécurité pour identifier de manière unique le téléviseur dans l'hébergement multi-pièces auprès du système ;
la communication, en réponse à la requête de connexion de dispositif de diffusion multimédia, d'un paquet de notification pour le ou chaque dispositif de diffusion multimédia (26) depuis un serveur en nuage (20) hors site connecté au pool de dispositifs de diffusion multimédia (26), le serveur en nuage (20) hors site est disposé à distance par rapport à l'hébergement multi-pièces et comprend un conteneur (22) de site virtuel d'hébergement multi-pièces connecté en communication au routeur d'hébergement multi-pièces (12) et au pool de dispositifs de diffusion multimédia (26), dans lequel le paquet de notification comprend au moins certains détails de description authentiques de dispositif et au moins certaines données modifiées configurées pour indiquer que le ou chaque dispositif de diffusion multimédia (26) est connecté au réseau local (14) sur site de l'hébergement multi-pièces, le serveur en nuage (20) étant configuré pour recevoir un message contenant l'ID unique et la clé de sécurité depuis un dispositif invité (18) et, en réponse, réserver initialement un ou plusieurs dispositifs de diffusion multimédia (26) parmi la pluralité de dispositifs de diffusion multimédia (26) à des fins d'utilisation par le dispositif invité (18) ;
l'établissement d'une connexion entre le dispositif invité (18) et l'un des dispositifs de diffusion multimédia (26) du pool de dispositifs de diffusion multimédia ;
la réception d'instructions pour le dispositif de diffusion multimédia (26) depuis le dispositif invité (18) au niveau du serveur en nuage (20) ; et
la génération d'un flux de données audio et vidéo au niveau du dispositif de diffusion multimédia (26) sur la base des instructions reçues, et le codage et la transmission des données audio et vidéo au téléviseur identifié dans l'hébergement multi-pièces à des fins d'affichage sur le téléviseur dans l'hébergement multi-pièces.

11. Procédé selon la revendication 11, dans lequel le conteneur (22) de site virtuel d'hébergement multi-pièces est configuré pour effectuer un filtrage de paquets des paquets de données provenant du réseau local (14) sur site dudit hébergement multi-pièces et une manipulation de paquets des paquets de données provenant du réseau local (14) sur site dudit hébergement multi-pièces.

12. Procédé selon la revendication 11 et la revendication 12, dans lequel des instructions pour le dispositif de diffusion multimédia (26) reçues par le conteneur (22) de site virtuel d'hébergement multi-pièces sont émulées ou transmises directement au dispositif de diffusion multimédia (26) de la connexion établie.

13. Procédé selon l'une quelconque des revendications 11 à 13, dans lequel les détails de description de dispositif pour chaque dispositif de diffusion multimédia (26) sont stockés dans un cache du serveur en nuage (20) et sont accessibles par le conteneur (22) de site virtuel d'hébergement multi-pièces.
